# EUROPEAN PATENT SPECIFICATION

(11) **EP 3 764 599 B1**
(45) Date of publication and mention of the grant of the patent: **25.01.2023**
(21) Application number: 19186104.6
(22) Date of filing: 12.07.2019
(51) Int. Cl.: H04L 12/28, H04L 67/125

(54) **MONITORING SMART DEVICES IN A NETWORK**
ÜBERWACHUNG VON INTELLIGENTEN VORRICHTUNGEN IN EINEM NETZWERK
SURVEILLANCE DE DISPOSITIFS INTELLIGENTS DANS UN RÉSEAU

(43) Date of publication of application: 13.01.2021
(73) Proprietor: Nokia Solutions and Networks Oy, 02610 Espoo (FI)
(72) Inventor: Rajapandiyan, Karthick, 600044 Chennai Tamilnadu (IN); Venu, Gunasekar, Ipswich IP3 9BH (GB)
(74) Representative: Novagraaf Technologies

(56) References cited:
- WO-A1-2015/097211
- US-A1- 2014 210 616
- US-A1- 2019 121 507

## Description

### Technical Field

The present disclosure relates to the Internet of Things and more specifically to methods, apparatus and user equipment for monitoring smart devices.

### Background

The "Internet of Things" (IoT) technology enables users and applications to communicate, control, and automate connected devices. Sensors and /or actuators may be used to control and monitor the operations of smart devices in a network, for example in a smart home, office, building, or city environments.

An IoT network may designate any network of physical devices (e.g. smart devices) embedded with electronics, software, sensors, actuators and network connectivity which enable these devices to collect and / or exchange data and / or perform actions. The smart home, also known as home automation or domotics, is a subset of IoT, focusing on the control and automation of pieces of equipments for lighting, heating, ventilation, air conditioning, security, etc.

Various communication protocols and data model standards may be used to support the integration and management of smart devices by multiple applications and services (e.g., smart energy management, fitness applications, and healthcare services). In addition, many sensors and event detection devices may be used for improving user experiences, system efficiency and reliability. Sensor data may be received from a plurality of smart devices and analysed by local or remote device to identify states and state transitions. Control actions and / or alert may be sent to users / monitoring devices based on the analysis.

As more smart devices and applications are integrated, the increased interactions between user behavior, environment conditions, and applications may increase the complexities of IoT management operations and user interfaces.

Patent document US2014/0210616A1 discloses a system to monitor the proximity of group of persons. For example, the group can be divided in to sub-groups with a group leader overseeing sub-group leaders, who in turn have primary responsibility for monitoring individual subgroup members. Proximity sensors may be attached to each of the sub-group members in forms of bracelets, headbands, pins, tags, etc. The proximity sensors are configured to transmit signals to a user device of the corresponding sub-group leader. The user device can determine at least the distance between the proximity sensors and the user device based on the received signal strength, and/or other signal characteristics or types of signals (e.g., signals that include location coordinates). If the distance exceeds a pre-defined threshold value, an alarm can be triggered on the sub-group leader's user device and a warning signal can be sent to the overall group leader.

### Summary

The scope of protection sought for various embodiments of the invention is set out by the independent claims. The various embodiments / examples, aspects and features, if any, described in this specification that do not fall under the scope of the independent claims are to be interpreted as examples useful for understanding various embodiments of the invention.

The scope of the protection is defined by the appended claims.

### Brief Description of the Figures

Some embodiments are now described, by way of example only, and with reference to the accompagnying drawings, in which :
- FIG. 1 schematically illustrates a communication system in which one or more disclosed embodiments may be implemented;

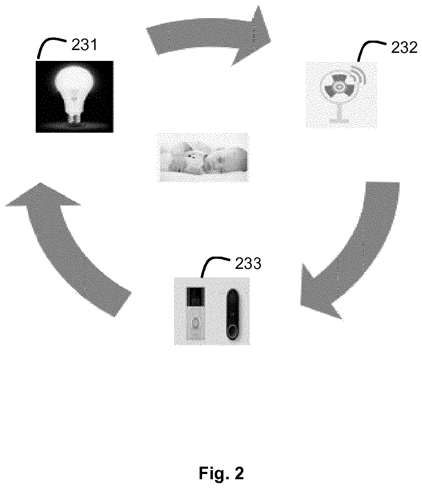

- FIG. 2 schematically illustrates a cluster of smart devices and an exemple of interdependency between smart devices ;
- FIG. 3 is a flowchart of an example method for monitoring smart devices;
- FIG. 4A is a flowchart of an example method for monitoring smart devices;
- FIG. 4B is a flowchart of an example method for monitoring smart devices;
- FIG. 5 schematically illustrates an example of a device for monitoring smart devices.

### Description of Embodiments

Example embodiments will be described below with reference to functions, engines, block diagrams, flow diagrams, state transition diagrams and / or flowcharts illustrating methods, apparatuses, systems, computer programs, computer readable mediums according to one or more exemplary embodiments.

It should be appreciated by those skilled in the art that any functions, engines, block diagrams, flow diagrams, state transition diagrams and / or flowcharts herein represent conceptual views of illustrative circuitry. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the following, functional blocks denoted as "means configured to perform ..." (a certain function) shall be understood as functional block(s) comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. Means for performing one or more functions may also comprises at least processor and at least one memory (e.g. in a system or apparatus) for storing computer program code configured to, with the at least one processor, cause the performance (by the system or apparatus) of the one or more functions.

When provided by a processor, the functions may be provided by a single dedicated processor, by a single shared processor, or by a plurality of individual processors, some of which may be shared. The functions of the various elements shown in the figures, including any functional blocks labeled as "processors", may be provided through the use of dedicated hardware as well as hardware capable of executing software in association with appropriate software.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used in this description, the term "circuitry" refers to (a) hardware-only circuit implementations (such as implementations in only analogue and/or digital circuitry); (b) combinations of circuits and software (and/or firmware), such as (as applicable) (i) a combination of analog and / or digital hardware circuits(s) with software and / or firmware, and (ii) any portions of hardware processor(s) with software (including digital signal processor(s)), software and memory(ies) that work together to cause an apparatus (such as the management systems described herein) to perform various functions; and (c) hardware circuit(s) and or processor(s), such as a microprocessors or a portion of a microprocessor(s), that require software (e.g. firmware) for operation, even if the software or firmware is not physically present when it is needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

One or more clusters of smart devices may be defined to facilite the configuration and / or monitoring of a group of smart devices for the implementation of a specific service involving a plurality of smart devices.

It may be a challenge to reliably provide efficient monitoring over a cluster of smart devices due to a functional or non functional interdependency between the smart devices in a network, for example in case of a failure of one or more smart devices of the cluster or in case of a removal of one of the smart devices from the user-defined cluster.

A smart device may be removed or moved away from the location of the other smart devices defined in the cluster, while there is some functional interdependency between the smart devices. A user may need to get an alert or notification about the defined cluster interdependent environment breakdown.

It appears thus important to monitor a group of smart devices having some functional interdependency. When there is an interdependency breakdown with the defined cluster, an automatic alert or warning or notification about the breakdown state may be sent to a user (e.g. an administrator) of the smart home network. The user may create and define multiple clusters within a smart home network and may then monitor in parallel all the defined clusters such that there is no breakage in the interdependent working of the smart devices and / or such that an alert/notification is sent as per the configuration of the defined cluster.

A solution is here described for defining a cluster-based monitoring of the smart devices by generating user-defined cluster profiles including a definition of a cluster as a group of smart devices and monitoring requirements for a monitoring apparatus (e.g. a home network gateway device) configured to monitor the clustered smart devices having interdependency. When there is a breakdown or disturbance of the interdependency of the clustered smart devices, a user will receive an alert on the basis of the defined cluster profile.

A monitoring apparatus (e.g. a home network gateway) may be configured to detect, based on the monitoring requirements, a broken state or removal or displacement or malfunction or unavailability or specific state of a smart device that impairs the interdependent working of the clustered smart devices. The monitoring apparatus may be configured to generate a warning or notice or alert based the detection and the monitoring requirements.

A user may define a cluster of smart devices within his/her smart home network for certain use specific cases and thus obtain a better control over these smart devices. If any one of the smart devices is removed or move to other places from the defined cluster, while the cluster smart devices work interdependently, the user may get alert or notification about the defined cluster interdependent environment breakdown. The purpose in this example is not simply to detect when a smart device is removed from a network, but to detect when the smart device is removed from a certain subset of that network such that an user defined interdependent environment breakdown occurs. For example, if the smart home network covers an entire house, the purpose is not to monitor the removal of a smart device from the house but instead to detect whether a smart device has been moved away from a smaller, user-defined, cluster of smart devices.

The cluster of smart devices to be monitored may be a sub-cluster of one or more system-defined clusters in case the smart devices are organized in one or more system-defined clusters. For example, a system-defined cluster may correspond to a set of smart devices including all smart devices in a given room, or all smart devices in a given sub-networks, or all smart devices of a given vendors or a set of interconnected smart devices, etc. The cluster of smart devices to be monitored is defined independently of these system-defined clusters and may include one or more smart deviced from one or more system-defined clusters.

More generally, the cluster of smart devices to be monitored may correspond to a set of smart devices that, from the perspective of the user's needs, have to fullfil one or more user-defined device interdependency criteria. The monitoring requirements include conditions to be met by the smart devices of the cluster to be monitored for guaranteeing an interdependent working of the plurality of smart devices in the user defined cluster to be monitored.

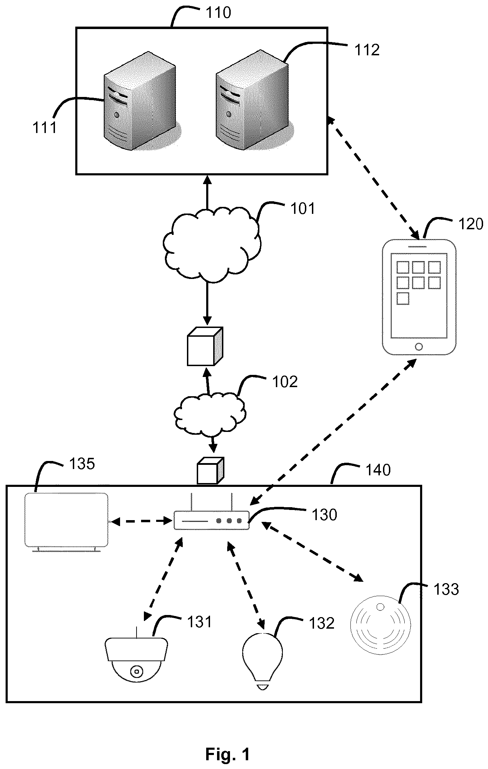

FIG. 1 is a diagram of an example communication system (100) in which one or more disclosed embodiments may be implemented. While FIG. 1 relates to the example of a smart home network (140), the same principles may be applied to any other type of smart device networks.

The communications system (100) may include one or more communication networks (101, 102), e.g. a wide area network (WAN) (101) and an access network (102) interconnecting an IoT server (110) with a gateway device (130) in a smart home network (140). Each communication network (101, 102) may be a wired / wireless network, an optical / non-optical network.

The smart home network (140) includes one or more networks of physical devices (e.g. smart devices 131, 132, 133). A smart device may be any apparatus embedded with electronics and / or software, sensors and / or actuators and network connectivity which enable this smart device to collect and / or exchange data and / or perform actions under the control of one or more monitoring devices. Examples of home devices that may have network connectivity and remote monitoring capcity may include: door sensor, smoke sensor, camera, bulb, lamp mount, temperature detector, humidity detector, plug, fan, music player, ringer, health care thermometer, etc.

The smart home network (140) may use any appropriate communication protocol to interconnect the smart devices (131, 132, 133) with the gateway device (130). Examples of communication protocols include: Wi-Fi, Zigbee, Z-wave, Bluetooth, or any appropriate proprietary protocols.

One or more user equipments (120, 135) may be configured to allow a user to monitor the smart devices (131, 132, 133) in the smart home network (140). A user equipment (UE) may be any apparatus configured with one or more user interfaces, such as a pager, a cellular telephone, a personal digital assistant (PDA), a smartphone, a laptop, a netbook, a personal computer, a wireless sensor, consumer electronics, an Internet of Things (IoT) device, a user device in an IoT environment, and the like. The one or more user interfaces may be configured to allow a user to enter a definition of a cluster of smart devices to be monitored and to enter monitoring requirements for the smart devices to be monitored.

The one or more user equipments (120, 135) may be configured to communicate through a communication network with a monitoring apparatus (e.g. with IoT server (110) and / or gateway device (130)) in order to provide to the monitoring apparatus the definition of a cluster of smart devices to be monitored and the monitoring requirements for the clustered smart devices to be monitored.

The IoT server (110) may be implemented by one or more physically distinct apparatuses (111, 112). The IoT server (110) may include functions such as data collection and data analysis for data collected from the smart devices (131, 132, 133) in the smart home network (140), management of the gateway device (130), device management and / or monitoring of the smart devices(131, 132, 133). The gateway device (130) may include functions such as data collection and data analysis for data collected from the smart devices (131, 132, 133), management and / or monitoring of the smart devices(131, 132, 133).

The monitoring functions are implemented by a monitoring apparatus as defined herein. The monitoring functions may the be implemented in the IoT server (110), in the gateway device (130) or partly in the IoT server (110) and partly in the gateway device (130). Thus the monitoring apparatus may correspond to the gateway device (130) and / or the IoT server (110).

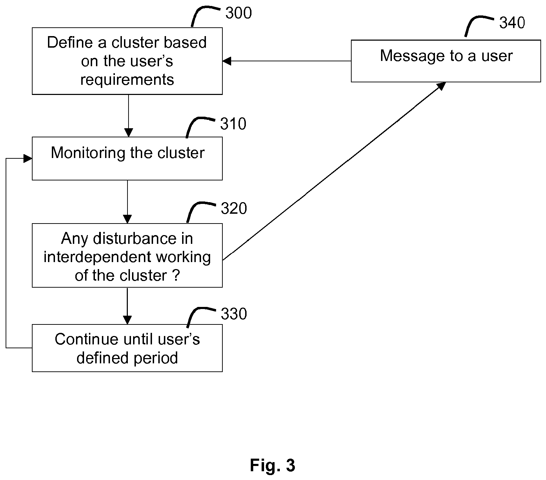

FIG. 3 shows a flowchart of a method for monitoring smart devices according to one or more example embodiments. The steps of the method may be implemented by a monitoring apparatus according to any example described herein.

While the steps are described in a sequential manner, the man skilled in the art will appreciate that some steps may be omitted, combined, performed in different order and / or in parallel.

In step 300, the monitoring apparatus obtains a definition of a cluster of smart devices to be monitored. The definition of the cluster is based on user's requirements. The user's requirements may include one or more operations to be triggered.

In step 310, the monitoring of the defined cluster is started.

In step 320, it is determined whether a disturbance in the interdependent working of the cluster is detected. If a disturbance is detected, then step 340 is executed after step 320. If no disturbance is detected, then step 330 is executed after step 320.

In step 330, it is determined whether a user-defined monitoring period is over. If the user-defined monitoring period is over, then the method end with step 330. If the user-defined monitoring period is not over, then step 310 is executed again after step 330.

In step 340, the one or more operations defined in step 300 in the user's requirements are triggered. For example, a warning message or an alert is sent to a user, for example to an administrator of the home network.

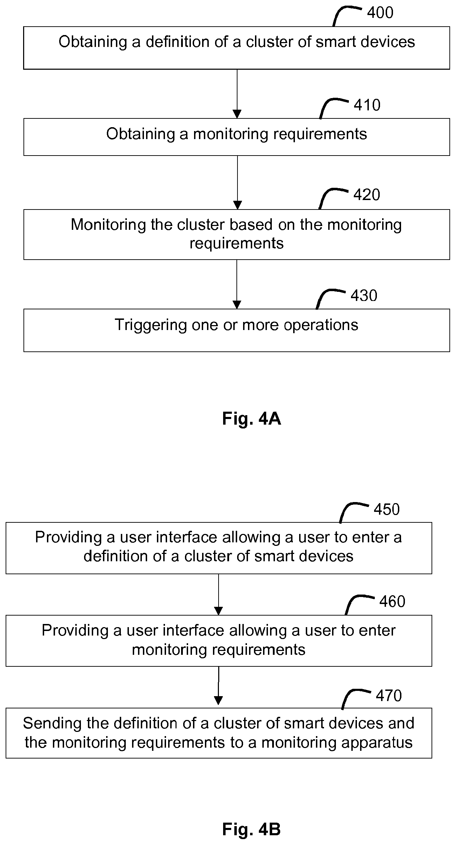

FIG. 4A shows a flowchart of a method for monitoring smart devices according to one or more example embodiments. The steps of the method may be implemented by a monitoring apparatus according to any example described herein.

While the steps are described in a sequential manner, the man skilled in the art will appreciate that some steps may be omitted, combined, performed in different order and / or in parallel.

In step 400, the monitoring apparatus obtains a definition of a cluster of smart devices to be monitored. The cluster to be monitored comprises a plurality of smart devices of the one or more networks. The cluster to be monitored may be a user-defined cluster. The definition of the cluster may be generated by a user, for example by using a list of the smart devices connected to the network and by selecting the smart devices to be added to the cluster. This definition may be updated by the user at any time.

In step 410, the monitoring apparatus obtains monitoring requirements for the of smart devices to be monitored. In one or more embodiment, the monitoring requirements are defined by a user of the one or more networks. The monitoring requirements comprise one or more user-defined conditions to be met by the plurality of smart devices for guaranteeing an interdependent working of the plurality of smart devices in the cluster to be monitored. The monitoring requirements comprise one or more operations to be triggered. The monitoring requirements may comprise a monitoring period which limits the duration or period of time during which the monitoring requirements have to be applied.

In step 420, the monitoring apparatus starts monitoring the plurality of smart devices in the cluster based on received the monitoring requirements to determine whether or not the one or more user-defined conditions are met by the plurality of smart devices.

In step 430, the monitoring apparatus triggers the one or more operations defined in the monitoring requirements received in step 410 when the one or more user-defined conditions are not met.

The steps 420-430 may be repeated several times over the monitoring period. The monitoring period may be a user-defined monitoring period.

FIG. 4B shows a flowchart of a method for monitoring smart devices according to one or more example embodiments. The steps of the method may be implemented by a user equipment according to any example described herein.

While the steps are described in a sequential manner, the man skilled in the art will appreciate that some steps may be omitted, combined, performed in different order and / or in parallel.

In step 450, a first user interface allowing a user to enter a definition of a cluster of smart devices to be monitored is provided. The cluster to be monitored comprises a plurality of smart devices in one or more networks. Like in step 400 described by reference to FIG. 4A, the definition of the cluster may be generated by a user, for example by using a list of the smart devices connected to the network and by selecting the smart devices to be added to the cluster. This definition may be updated by the user at any time.

In step 460, a second user interface allowing a user to enter monitoring requirements for the of smart devices to be monitored is provided. In one or more embodiment, the monitoring requirements are defined by a user of the one or more networks. and reflect user's requirements. The monitoring requirements comprise one or more user-defined conditions to be met by the plurality of smart devices for guaranteeing an interdependent working of the plurality of smart devices in the cluster to be monitored. The monitoring requirements comprise one or more operations to be triggered. The monitoring requirements may comprise a monitoring period which limits the duration or period of time during which the monitoring requirements have to be applied.

In step 470, the definition of a cluster of smart devices to be monitored and the monitoring requirements is sent to a monitoring apparatus which is configured to monitor the plurality of smart devices based on the monitoring requirements to determine whether or not the one or more user-defined conditions are met by the plurality of smart devices and to trigger the one or more operations when the one or more user-defined conditions are not met.

In the embodiments described herein, inter alia by reference to FIGS. 4A and 4B, the user-defined conditions to be met by the plurality of smart devices in a cluster may be: - conditions related to a localization of one or more smart devices in the cluster to be monitored; and / or
- conditions related to a distance between two or more smart devices in the cluster to be monitored; and / or
- conditions related to an operating state of one or more smart devices of the plurality of smart devices in the cluster to be monitored; and / or
- conditions related to one or more configuration parameters of one or more smart devices in the cluster to be monitored; and / or
- conditions related to one or more sensed parameters of one or more smart devices in the cluster to be monitored.

The definition of the monitoring requirements may be generated for example relatively to a set of one or more monitored parameters that the monitoring device is capable to monitor for each smart device in the cluster and a range / set of possible values for each monitored parameter. A user interface may be provided that enables a user to specify conditions relatively to one or more monitored parameters.

For example, if the monitored parameter is the localization of the smart device, a condition to be met by the localization of a smart device may be that the smart device is located in a given room of the building in which the smart device is placed and / or within a given area around a current location.

For example, if the monitored parameter is the operating state of the smart device, a condition to be met by the operating state of a smart device may be that the smart device is switched on or switched off or in standby mode.

For example, if the monitored parameter is a configuration parameter (for example, the volume of a speaker, an intensity of variable light, etc) for configuring the smart device, a condition to be met may be defined by a range of values or an upper or lower threshold.

For example, if the monitored parameter is a sensed parameter that the smart device is configured to acquire, a condition to be met may be defined by a range of values or an upper or lower threshold.

The definition of the monitoring requirements may be updated by the user at any time.

In the different methods described herein, the triggered operations may include: triggering an alert, sending an information message to a user equipment, switching on / off one or more smart devices (whether in the monitored cluster or not) in the network, changing one or more parameters of one or more smart devices (whether in the monitored cluster or not) in the network, sending a command to one or more smart devices (whether in the monitored cluster or not) in the network, etc.

An example use case will now be described.

In the example use case, where three smart bulbs and a smart music player are all present in a cluster in the same room in a house that may have many other smart bulbs. The smart devices are configured so that those three bulbs change their lighting in response to the music being played on the music player (e.g. they flash different colours in time with the music). It would be very easy for someone to move the music player into a different room, or to take one other bulbs to replace a faulty bulb elsewhere in the house. In each case, when music starts to play then one or more bulbs will start to flash in another room without the music and this impairs the user experience. In this use case, it may be possible to warn a user and / or to switch off the change of lighting of the bulbs in dependency of the music. This situation is much worse than the fan example because the removal of the bulb or the music player has an undesired result. The smart devices in the cluster functionaly interact one with each other and are not simply independent smart devices that happen to be positioned in the same area.

In the example use case, thanks to the definition of the cluster and associated monitoring requirements, a monitoring service on top of functions provided by the interdependent smart devices themselves is implemented for guarantying a given interdependency between the smart devices in the cluster. The definition of the cluster and / or the associated monitoing requirements is / are based on user's requirements to prevent a user-defined interdependency between the smart devices in the cluster from being broken or impaired. Any set of smart devices may be monitored to provide customized cluster-based monitoring services.

A person of skill in the art would readily recognize that steps of various methods described herein can be performed by programmed computers.

Herein, some embodiments are also intended to cover program storage devices, e.g., digital data storage media, which are machine or computer readable and encode machine-executable or computer-executable programs of instructions, wherein such instructions are configured to cause the execution of some or all of the steps of said above-described methods by a corresponding apparatus or system. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

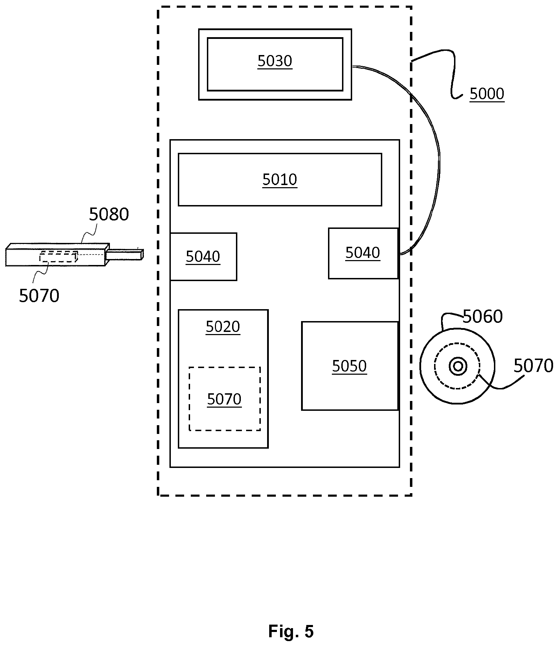

For completeness, FIG. 5 is a schematic diagram showing components of one or more of the monitoring apparatus and user equipement described previously. The monitoring apparatus and / or the user equipment may be implemented as a processing device (5000) for performing the functions described herein respectively for the monitoring apparatus and the user equipment.

The processing device (5000) may be implemented as a single hardware device, for example in the form of a desktop personal computer (PC), a laptop, a personal digital assistant (PDA), a smart phone, a server, a console or may be implemented on separate interconnected hardware devices interconnected by one or more communication links, with wired and/or wireless segments. The processing device (5000) may for example be in communication with one or more cloud computing systems, one or more remote servers or devices to implement the functions described herein for the concerned processing device. The processing device (5000) may also be implemented itself as a cloud computing system.

As represented schematically on FIG. 5, the processing device (5000) may include at least one processors (5010), at least one memory (5050), and one or more communication interfaces (5040) (e.g. network interfaces for access to a wired / wireless network, including Ethernet interface, WIFI interface, USB interfaces etc) configured to communicate via network and / or to one or more peripheral devices (including a computer-readable storage medium 5080). The processing device (5000) may include other associated hardware such as user interfaces (5030) (e.g. keyboard, mice, display screen, etc) connected via appropriate communication interface(s) (5040) with the processor. The processing device (5000) may further include a media drive (5050) for reading a computer-readable storage medium 5060. The processor (5010) is connected to each of the other components in order to control operation thereof.

The processor (5010) may be configured to store, read, load and/or otherwise process computer program code (5070) stored in a computer-readable storage medium (5060) or 5080 and / or in the memory (5050) that, when executed by the at least one processor, causes the processing device (5000) to perform one or more steps of a method described herein for the concerned processing device (5000).

The processor (5010) may be any suitable microprocessor, microcontroller, integrated circuit, or central processing unit (CPU) including at least one hardware-based processor or processing core.

The memory (5050) may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory (5050) may be configured to store, amongst other things, an operating system of the processing device (5000) and / or one or more computer program code of one or more software applications. The RAM of the memory (5050) may be used by the processor (5010) for the temporary storage of data.

Embodiments of a computer-readable medium (5060), (5080) includes, but are not limited to, both computer storage media and communication media including any medium that facilitates transfer of a computer program from one place to another. Specifically, program instructions or computer readable program code to perform embodiments described herein may be stored, temporarily or permanently, in whole or in part, on a non-transitory computer readable medium of a local or remote storage device including one or more storage media.

As used herein, a computer storage medium (5060), (5080) may be any physical media that can be read, written or more generally accessed by a computer / a processing device. Examples of computer storage media include, but are not limited to, a flash drive or other flash memory devices (e.g. memory keys, memory sticks, USB key drive), CD-ROM or other optical storage, DVD, magnetic disk storage or other magnetic storage devices, solid state memory, memory chip, RAM, ROM, EEPROM, smart cards, a relational database management system, a traditional database, or any other suitable medium from that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc.

The description and drawings merely illustrate the principles of the invention. It will thus be appreciated that those skilled in the art will be able to devise various arrangements that, although not explicitly described or shown herein

## Claims

1. A monitoring apparatus (110, 130) comprising means for performing a method for monitoring smart devices, the method comprising
obtaining (400) a definition of a cluster of smart devices to be monitored, wherein the cluster to be monitored comprises a plurality of smart devices in one or more networks;
obtaining (410) monitoring requirements for the cluster to be monitored, wherein the monitoring requirements comprises one or more user-defined conditions to be met by the plurality of smart devices for guaranteeing a user-defined interdependency between the plurality of smart devices in the cluster to be monitored and one or more operations to be triggered; wherein the one or more user-defined conditions to be met by the plurality of smart devices are for guaranteeing an interdependent working of the plurality of smart devices in the cluster to be monitored;
monitoring (420) the plurality of smart devices based on the monitoring requirements to determine whether or not the one or more user-defined conditions are met by the plurality of smart devices;
triggering (430) the one or more operations when the one or more user-defined conditions are not met.

2. The monitoring apparatus of claim 1, wherein the smart devices are organized in the one or more networks in one or more system-defined clusters and the cluster to be monitored is a sub-cluster of one or more system-defined clusters.

3. The monitoring apparatus of claim 1 or 2, wherein the user-defined conditions are conditions related to a localization of one or more smart devices in the cluster to be monitored and / or conditions related to a distance between two or more smart devices in the cluster to be monitored and / or an operating state of one or more smart devices of the plurality of smart devices in the cluster to be monitored and / or one or more configuration parameters of one or more smart devices in the cluster to be monitored and / or to one or more sensed parameters acquired by one or more smart devices in the cluster to be monitored.

4. The monitoring apparatus of any preceding claim wherein the means comprises at least one processor; and
at least one memory including computer program code, wherein the at least one memory and computer program code are configured to, with the at least one processor, cause the monitoring apparatus to perform the steps of the method.

5. A user equipment (120, 135) comprising means for performing a method for monitoring smart devices, the method comprising
providing (450) a first user interface allowing a user to enter a definition of a cluster of smart devices to be monitored, wherein the cluster to be monitored comprises a plurality of smart devices in one or more networks;
providing (460) a second user interface allowing a user to enter monitoring requirements for the cluster of smart devices to be monitored, wherein the monitoring requirements comprises one or more user-defined conditions to be met by the plurality of smart devices for guaranteeing a user-defined interdependency between the plurality of smart devices in the cluster to be monitored and one or more operations to be triggered, wherein the one or more user-defined conditions to be met by the plurality of smart devices are for guaranteeing an interdependent working of the plurality of smart devices in the cluster to be monitored;
sending (470) the definition of a cluster of smart devices to be monitored and the monitoring requirements to a monitoring apparatus configured to monitor the plurality of smart devices based on the monitoring requirements to determine whether or not the one or more user-defined conditions are met by the plurality of smart devices and to trigger the one or more operations when the one or more user-defined conditions are not met.

6. The user equipment of claim 5, wherein the smart devices in the one or more networks are organized in one or more system-defined clusters and the cluster to be monitored is a sub-cluster of one or more system-defined clusters.

7. The user equipment of claim 5 or claim 6, wherein the user-defined conditions are conditions related to a localization of one or more smart devices in the cluster to be monitored and / or conditions related to a distance between two or more smart devices in the cluster to be monitored and / or an operating state of one or more smart devices of the plurality of smart devices in the cluster to be monitored and / or one or more configuration parameters of one or more smart devices in the cluster to be monitored and / or to one or more sensed parameters acquired by one or more smart devices in the cluster to be monitored.

8. The user equipment according to any of claims 5 to 7, wherein the means comprises
at least one processor; and
at least one memory including computer program code, wherein the at least one memory and computer program code are configured to, with the at least one processor, cause the user equipment to perform the steps of the method.

9. A method for monitoring smart devices by a monitoring apparatus, the method comprising
obtaining (400) a definition of a cluster to be monitored, the cluster comprising a plurality of smart devices of one or more networks;
obtaining (410) monitoring requirements for the cluster, wherein the monitoring requirements comprises user-defined conditions to be met by the plurality of smart devices for guaranteeing a user-defined interdependency between the plurality of smart devices and one or more operations to be triggered, wherein the one or more user-defined conditions to be met by the plurality of smart devices are for guaranteeing an interdependent working of the plurality of smart devices in the cluster to be monitored;
monitoring (420) the plurality of smart devices based on the monitoring requirements to determine whether or not the user-defined conditions are met by the plurality of smart devices;
triggering (430) the one or more operations when the user-defined conditions are not met.

10. A method for monitoring smart devices by a user equipment, the method comprising
providing (450) a user interface allowing a user to enter a definition of a cluster of smart devices to be monitored, wherein the cluster to be monitored comprises a plurality of smart devices in one or more networks;
providing (460) a user interface allowing a user to enter monitoring requirements for the cluster of smart devices to be monitored, wherein the monitoring requirements comprises one or more user-defined conditions to be met by the plurality of smart devices for guaranteeing a user-defined interdependency between the plurality of smart devices in the cluster to be monitored and one or more operations to be triggered, wherein the one or more user-defined conditions to be met by the plurality of smart devices are for guaranteeing an interdependent working of the plurality of smart devices in the cluster to be monitored;
sending (470) the definition of a cluster of smart devices to be monitored and the monitoring requirements to a monitoring apparatus configured to monitor the plurality of smart devices based on the monitoring requirements in order to determine whether or not the one or more user-defined conditions are met by the plurality of smart devices and to trigger the one or more operations when the one or more user-defined conditions are not met.

11. A computer readable medium comprising program instructions stored thereon for causing an apparatus to perform the steps of the method according to claim 9 or claim 10.

## Patentansprüche

1. Überwachungseinrichtung (110, 130), die Mittel zum Durchführen eines Verfahrens zum Überwachen von intelligenten Vorrichtungen umfasst, wobei das Verfahren Folgendes umfasst:
Erhalten (400) einer Definition eines zu überwachenden Clusters von intelligenten Vorrichtungen, wobei der zu überwachende Cluster eine Vielzahl von intelligenten Vorrichtungen in einem oder mehreren Netzwerken umfasst;
Erhalten (410) von Überwachungsanforderungen für den zu überwachenden Cluster, wobei die Überwachungsanforderungen eine oder mehrere benutzerdefinierte Bedingungen umfassen, die zum Garantieren einer benutzerdefinierten gegenseitigen Abhängigkeit zwischen der Vielzahl von intelligenten Vorrichtungen in dem zu überwachenden Cluster und einer oder mehreren auszulösenden Operationen von der Vielzahl von intelligenten Vorrichtungen erfüllt werden müssen; wobei die eine oder die mehreren benutzerdefinierten Bedingungen, die von der Vielzahl von intelligenten Vorrichtungen erfüllt werden müssen, dem Garantieren eines gegenseitig abhängigen Arbeitens in der Vielzahl von intelligenten Vorrichtungen in dem zu überwachenden Cluster dienen;
Überwachen (420) der Vielzahl von intelligenten Vorrichtungen auf Basis der Überwachungsanforderungen, um zu bestimmen, ob die eine oder die mehreren benutzerdefinierten Bedingungen durch die Vielzahl von intelligenten Vorrichtungen erfüllt sind;
Auslösen (430) der einen oder der mehreren Operationen, wenn die eine oder die mehreren benutzerdefinierten Bedingungen nicht erfüllt sind.

2. Überwachungseinrichtung nach Anspruch 1, wobei die intelligenten Vorrichtungen in dem einen oder den mehreren Netzwerken in einem oder mehreren systemdefinierten Clustern organisiert sind und der zu überwachende Cluster ein Untercluster von einem oder mehreren systemdefinierten Clustern ist.

3. Überwachungseinrichtung nach Anspruch 1 oder 2, wobei die benutzerdefinierten Bedingungen Bedingungen sind, die eine Lokalisierung von einer oder mehreren intelligenten Vorrichtungen in dem zu überwachenden Cluster betreffen, und/oder Bedingungen, die einen Abstand zwischen zwei oder mehr intelligenten Vorrichtungen in dem zu überwachenden Cluster und/oder einen Betriebszustand von einer oder mehreren intelligenten Vorrichtungen der Vielzahl von intelligenten Vorrichtungen in dem zu überwachenden Cluster und/oder einen oder mehrere Auslegungsparameter von einer oder mehreren intelligenten Vorrichtungen in dem zu überwachenden Cluster und/oder einen oder mehrere gemessene Parameter, die von einer oder mehreren intelligenten Vorrichtungen in dem zu überwachenden Cluster erfasst wurden, betreffen.

4. Überwachungseinrichtung nach einem der vorhergehenden Ansprüche, wobei die Mittel Folgendes umfassen
mindestens einen Prozessor; und
mindestens einen Speicher, der Computerprogrammcode beinhaltet, wobei der mindestens eine Speicher und der Computerprogrammcode dazu ausgelegt sind, mit dem mindestens einen Prozessor zu bewirken, dass die Überwachungseinrichtung die Schritte des Verfahrens durchführt.

5. Teilnehmereinrichtung (120, 135), die Mittel zum Durchführen eines Verfahrens zum Überwachen von intelligenten Vorrichtungen umfasst, wobei das Verfahren Folgendes umfasst
Bereitstellen (450) einer ersten Benutzerschnittstelle, die es einem Benutzer erlaubt, eine Definition eines zu überwachenden Clusters von intelligenten Vorrichtungen einzugeben, wobei der zu überwachende Cluster eine Vielzahl von intelligenten Vorrichtungen in einem oder mehreren Netzwerken umfasst;
Bereitstellen (460) einer zweiten Benutzerschnittstelle, die es einem Benutzer erlaubt, Überwachungsanforderungen für den zu überwachenden Cluster von intelligenten Vorrichtungen einzugeben, wobei die Überwachungsanforderungen eine oder mehrere benutzerdefinierte Bedingungen umfassen, die zum Garantieren einer benutzerdefinierten gegenseitigen Abhängigkeit zwischen der Vielzahl von intelligenten Vorrichtungen in dem zu überwachenden Cluster und einer oder mehreren auszulösenden Operationen von der Vielzahl von intelligenten Vorrichtungen erfüllt werden müssen, wobei die eine oder die mehreren benutzerdefinierten Bedingungen, die von der Vielzahl von intelligenten Vorrichtungen erfüllt werden müssen, dem Garantieren eines gegenseitig abhängigen Arbeitens in der Vielzahl von intelligenten Vorrichtungen in dem zu überwachenden Cluster dienen;
Senden (470) der Definition eines zu überwachenden Clusters von intelligenten Vorrichtungen und der Überwachungsanforderungen an eine Überwachungseinrichtung, die dazu ausgelegt ist, die Vielzahl von intelligenten Vorrichtungen auf Basis der Überwachungsanforderungen zu überwachen, um zu bestimmen, ob die eine oder die mehreren benutzerdefinierten Bedingungen durch die Vielzahl von intelligenten Vorrichtungen erfüllt werden, und um die eine oder die mehreren Operationen auszulösen, wenn die eine oder die mehreren benutzerdefinierten Bedingungen nicht erfüllt sind.

6. Teilnehmereinrichtung nach Anspruch 5, wobei die intelligenten Vorrichtungen in dem einen oder den mehreren Netzwerken in einem oder mehreren systemdefinierten Clustern organisiert sind und der zu überwachende Cluster ein Untercluster von einem oder mehreren systemdefinierten Clustern ist.

7. Teilnehmereinrichtung nach Anspruch 5 oder Anspruch 6, wobei die benutzerdefinierten Bedingungen Bedingungen sind, die eine Lokalisierung von einer oder mehreren intelligenten Vorrichtungen in dem zu überwachenden Cluster betreffen, und/oder Bedingungen, die einen Abstand zwischen zwei oder mehr intelligenten Vorrichtungen in dem zu überwachenden Cluster und/oder einen Betriebszustand von einer oder mehreren intelligenten Vorrichtungen der Vielzahl von intelligenten Vorrichtungen in dem zu überwachenden Cluster und/oder einen oder mehrere Auslegungsparameter von einer oder mehreren intelligenten Vorrichtungen in dem zu überwachenden Cluster und/oder einen oder mehrere gemessene Parameter, die von einer oder mehreren intelligenten Vorrichtungen in dem zu überwachenden Cluster erfasst wurden, betreffen.

8. Teilnehmereinrichtung nach einem der Ansprüche 5 bis 7, wobei die Mittel Folgendes umfassen
mindestens einen Prozessor; und
mindestens einen Speicher, der Computerprogrammcode beinhaltet, wobei der mindestens eine Speicher und der Computerprogrammcode dazu ausgelegt sind, mit dem mindestens einen Prozessor zu bewirken, dass die Teilnehmereinrichtung die Schritte des Verfahrens durchführt.

9. Verfahren zum Überwachen von intelligenten Vorrichtungen durch eine Überwachungseinrichtung, wobei das Verfahren Folgendes umfasst
Erhalten (400) einer Definition eines zu überwachenden Clusters, wobei der Cluster eine Vielzahl von intelligenten Vorrichtungen in einem oder mehreren Netzwerken umfasst;
Erhalten (410) von Überwachungsanforderungen für den Cluster, wobei die Überwachungsanforderungen benutzerdefinierte Bedingungen umfassen, die zum Garantieren einer benutzerdefinierten gegenseitigen Abhängigkeit zwischen der Vielzahl von intelligenten Vorrichtungen und einer oder mehreren auszulösenden Operationen von der Vielzahl von intelligenten Vorrichtungen erfüllt werden müssen, wobei die eine oder die mehreren benutzerdefinierten Bedingungen, die von der Vielzahl von intelligenten Vorrichtungen erfüllt werden müssen, dem Garantieren eines gegenseitig abhängigen Arbeitens in der Vielzahl von intelligenten Vorrichtungen in dem zu überwachenden Cluster dienen;
Überwachen (420) der Vielzahl von intelligenten Vorrichtungen auf Basis der Überwachungsanforderungen, um zu bestimmen, ob die benutzerdefinierten Bedingungen durch die Vielzahl von intelligenten Vorrichtungen erfüllt sind;
Auslösen (430) der einen oder der mehreren Operationen, wenn die benutzerdefinierten Bedingungen nicht erfüllt sind.

10. Verfahren zum Überwachen von intelligenten Vorrichtungen durch eine Teilnehmereinrichtung, wobei das Verfahren Folgendes umfasst
Bereitstellen (450) einer Benutzerschnittstelle, die es einem Benutzer erlaubt, eine Definition eines zu überwachenden Clusters von intelligenten Vorrichtungen einzugeben, wobei der zu überwachende Cluster eine Vielzahl von intelligenten Vorrichtungen in einem oder mehreren Netzwerken umfasst;
Bereitstellen (460) einer Benutzerschnittstelle, die es einem Benutzer erlaubt, Überwachungsanforderungen für den zu überwachenden Cluster von intelligenten Vorrichtungen einzugeben, wobei die Überwachungsanforderungen eine oder mehrere benutzerdefinierte Bedingungen umfassen, die zum Garantieren einer benutzerdefinierten gegenseitigen Abhängigkeit zwischen der Vielzahl von intelligenten Vorrichtungen in dem zu überwachenden Cluster und einer oder mehreren auszulösenden Operationen von der Vielzahl von intelligenten Vorrichtungen erfüllt werden müssen, wobei die eine oder die mehreren benutzerdefinierten Bedingungen, die von der Vielzahl von intelligenten Vorrichtungen erfüllt werden müssen, dem Garantieren eines gegenseitig abhängigen Arbeitens in der Vielzahl von intelligenten Vorrichtungen in dem zu überwachenden Cluster dienen;
Senden (470) der Definition eines zu überwachenden Clusters von intelligenten Vorrichtungen und der Überwachungsanforderungen an eine Überwachungseinrichtung, die dazu ausgelegt ist, die Vielzahl von intelligenten Vorrichtungen auf Basis der Überwachungsanforderungen zu überwachen, um zu bestimmen, ob die eine oder die mehreren benutzerdefinierten Bedingungen durch die Vielzahl von intelligenten Vorrichtungen erfüllt werden, und um die eine oder die mehreren Operationen auszulösen, wenn die eine oder die mehreren benutzerdefinierten Bedingungen nicht erfüllt sind.

11. Computerlesbares Medium, auf dem darauf gespeicherte Programmanweisungen zum Bewirken, dass eine Einrichtung die Schritte des Verfahrens nach Anspruch 9 oder Anspruch 10 durchführt, umfasst sind.

## Revendications

1. Appareil de surveillance (110, 130) qui comprend un moyen pour réaliser un procédé de surveillance de dispositifs intelligents, le procédé comprenant
l'obtention (400) d'une définition d'une grappe de dispositifs intelligents à surveiller, dans lequel la grappe à surveiller comprend une pluralité de dispositifs intelligents dans un ou plusieurs réseaux ;
l'obtention (410) d'exigences de surveillance pour la grappe à surveiller, dans lequel les exigences de surveillance comprennent une ou plusieurs conditions définies par un utilisateur qui doivent être satisfaites par la pluralité de dispositifs intelligents pour garantir une interdépendance définie par un utilisateur entre la pluralité de dispositifs intelligents dans la grappe à surveiller et une ou plusieurs opérations à déclencher ; dans lequel les une ou plusieurs conditions définies par un utilisateur qui doivent être satisfaites par la pluralité de dispositifs intelligents sont destinées à garantir un travail interdépendant de la pluralité de dispositifs intelligents dans la grappe à surveiller ;
la surveillance (420) de la pluralité de dispositifs intelligents sur la base des exigences de surveillance pour déterminer si oui ou non les une ou plusieurs conditions définies par un utilisateur sont satisfaites par la pluralité de dispositifs intelligents ;
le déclenchement (430) des une ou plusieurs opérations lorsque les une ou plusieurs conditions définies par un utilisateur ne sont pas satisfaites.

2. Appareil de surveillance selon la revendication 1, dans lequel les dispositifs intelligents sont organisés dans les un ou plusieurs réseaux dans une ou plusieurs grappes définies par un système et la grappe à surveiller est une sous-grappe d'une ou plusieurs grappes définies par un système.

3. Appareil de surveillance selon la revendication 1 ou 2, dans lequel les conditions définies par un utilisateur sont des conditions relatives à un emplacement d'un ou plusieurs dispositifs intelligents dans la grappe à surveiller et/ou des conditions relatives à une distance entre deux ou plusieurs dispositifs intelligents dans la grappe à surveiller et/ou un état de fonctionnement d'un ou plusieurs dispositifs intelligents de la pluralité de dispositifs intelligents dans la grappe à surveiller et/ou un ou plusieurs paramètres de configuration d'un ou plusieurs dispositifs intelligents dans la grappe à surveiller et/ou un ou plusieurs paramètres détectés acquis par un ou plusieurs dispositifs intelligents dans la grappe à surveiller.

4. Appareil de surveillance selon l'une quelconque des revendications précédentes, dans lequel le moyen comprend
au moins un processeur ; et
au moins une mémoire qui inclut un code de programme informatique, dans lequel les au moins une mémoire et code de programme informatique sont configurés pour, avec le au moins un processeur, amener l'appareil de surveillance à réaliser les étapes du procédé.

5. Équipement utilisateur (120, 135) qui comprend un moyen pour réaliser un procédé de surveillance de dispositifs intelligents, le procédé comprenant
la fourniture (450) d'une première interface utilisateur qui permet à un utilisateur d'entrer une définition d'une grappe de dispositifs intelligents à surveiller, dans lequel la grappe à surveiller comprend une pluralité de dispositifs intelligents dans un ou plusieurs réseaux ;
la fourniture (460) d'une seconde interface utilisateur qui permet à un utilisateur d'entrer des exigences de surveillance pour la grappe de dispositifs intelligents à surveiller, dans lequel les exigences de surveillance comprennent une ou plusieurs conditions définies par un utilisateur qui doivent être satisfaites par la pluralité de dispositifs intelligents pour garantir une interdépendance définie par un utilisateur entre la pluralité de dispositifs intelligents dans la grappe à surveiller et une ou plusieurs opérations à déclencher, dans lequel les une ou plusieurs conditions définies par un utilisateur qui doivent être satisfaites par la pluralité de dispositifs intelligents sont destinées à garantir un travail interdépendant de la pluralité de dispositifs intelligents dans la grappe à surveiller ;
l'envoi (470) de la définition d'une grappe de dispositifs intelligents à surveiller et des exigences de surveillance à un appareil de surveillance configuré pour surveiller la pluralité de dispositifs intelligents sur la base des exigences de surveillance pour déterminer si oui ou non les une ou plusieurs conditions définies par un utilisateur sont satisfaites par la pluralité de dispositifs intelligents et pour déclencher les une ou plusieurs opérations lorsque les une ou plusieurs conditions définies par un utilisateur ne sont pas satisfaites.

6. Équipement utilisateur selon la revendication 5, dans lequel les dispositifs intelligents dans les un ou plusieurs réseaux sont organisés dans une ou plusieurs grappes définies par un système et la grappe à surveiller est une sous-grappe d'une ou plusieurs grappes définies par un système.

7. Équipement utilisateur selon la revendication 5 ou la revendication 6, dans lequel les conditions définies par un utilisateur sont des conditions relatives à un emplacement d'un ou plusieurs dispositifs intelligents dans la grappe à surveiller et/ou des conditions relatives à une distance entre deux ou plusieurs dispositifs intelligents dans la grappe à surveiller et/ou un état de fonctionnement d'un ou plusieurs dispositifs intelligents de la pluralité de dispositifs intelligents dans la grappe à surveiller et/ou un ou plusieurs paramètres de configuration d'un ou plusieurs dispositifs intelligents dans la grappe à surveiller et/ou un ou plusieurs paramètres détectés acquis par un ou plusieurs dispositifs intelligents dans la grappe à surveiller.

8. Équipement utilisateur selon l'une quelconque des revendications 5 à 7, dans lequel le moyen comprend
au moins un processeur ; et
au moins une mémoire qui inclut un code de programme informatique, dans lequel les au moins une mémoire et code de programme informatique sont configurés pour, avec le au moins un processeur, amener l'équipement utilisateur à réaliser les étapes du procédé.

9. Procédé de surveillance de dispositifs intelligents par un appareil de surveillance, le procédé comprenant
l'obtention (400) d'une définition d'une grappe à surveiller, la grappe comprenant une pluralité de dispositifs intelligents d'un ou plusieurs réseaux ;
l'obtention (410) d'exigences de surveillance pour la grappe, dans lequel les exigences de surveillance comprennent des conditions définies par un utilisateur qui doivent être satisfaites par la pluralité de dispositifs intelligents pour garantir une interdépendance définie par un utilisateur entre la pluralité de dispositifs intelligents et une ou plusieurs opérations à déclencher, dans lequel les une ou plusieurs conditions définies par un utilisateur qui doivent être satisfaites par la pluralité de dispositifs intelligents sont destinées à garantir un travail interdépendant de la pluralité de dispositifs intelligents dans la grappe à surveiller ;
la surveillance (420) de la pluralité de dispositifs intelligents sur la base des exigences de surveillance pour déterminer si oui ou non les conditions définies par un utilisateur sont satisfaites par la pluralité de dispositifs intelligents ;
le déclenchement (430) des une ou plusieurs opérations lorsque les conditions définies par un utilisateur ne sont pas satisfaites.

10. Procédé de surveillance de dispositifs intelligents par un équipement utilisateur, le procédé comprenant
la fourniture (450) d'une interface utilisateur qui permet à un utilisateur d'entrer une définition d'une grappe de dispositifs intelligents à surveiller, dans lequel la grappe à surveiller comprend une pluralité de dispositifs intelligents dans un ou plusieurs réseaux ;
la fourniture (460) d'une interface utilisateur qui permet à un utilisateur d'entrer des exigences de surveillance pour la grappe de dispositifs intelligents à surveiller, dans lequel les exigences de surveillance comprennent une ou plusieurs conditions définies par un utilisateur qui doivent être satisfaites par la pluralité de dispositifs intelligents pour garantir une interdépendance définie par un utilisateur entre la pluralité de dispositifs intelligents dans la grappe à surveiller et une ou plusieurs opérations à déclencher, dans lequel les une ou plusieurs conditions définies par un utilisateur qui doivent être satisfaites par la pluralité de dispositifs intelligents sont destinées à garantir un travail interdépendant de la pluralité de dispositifs intelligents dans la grappe à surveiller ;
l'envoi (470) de la définition d'une grappe de dispositifs intelligents à surveiller et des exigences de surveillance à un appareil de surveillance configuré pour surveiller la pluralité de dispositifs intelligents sur la base des exigences de surveillance afin de déterminer si oui ou non les une ou plusieurs conditions définies par un utilisateur sont satisfaites par la pluralité de dispositifs intelligents et pour déclencher les une ou plusieurs opérations lorsque les une ou plusieurs conditions définies par un utilisateur ne sont pas satisfaites.

11. Support lisible par ordinateur qui comprend des instructions de programme stockées à l'intérieur pour amener un appareil à réaliser les étapes du procédé selon la revendication 9 ou la revendication 10.
